# EUROPEAN PATENT APPLICATION

(11) **EP 2 136 325 A2**
(43) Date of publication of application: **23.12.2009**
(21) Application number: 09251054.4
(22) Date of filing: 07.04.2009
(51) Int. Cl.: G06Q 10/00

(54) **Visualisation system and method**

(30) Priority: 08.04.2008 GB 0806351
(71) Applicant: Salamander Enterprises Limited, York Science park York YO10 5ZF (GB)
(72) Inventor: Whittington, Dick, York YO10 5ZF (GB); Gowing, Caroline, Haslemere, West Sussex GU27 3NR (GB)
(74) Representative: Wood, Graham

(57) **Abstract**

The invention to which the application relates is a method and system by which a visualisation of a predetermined subject can be generated with the assets and/or attributes of the subject identified and, if assessed, the results of the assessment can be indicated. The visualisation comprises a centre point with a core which represents the subject and a series of annular rings depending outwardly therefrom, each ring represents a set of assets or attributes and each ring has a segment representing each of the assets or attributes in the set. The visualisation allows effective analysis and representation of the predetermined subject.

## Description

The invention to which this application relates is to the provision of a system which allows assets, or other attributes of a predetermined subject such as, for example, an organisation, or a project or task, to be visually represented. More particularly the aim is to allow the said assets or attributes to be visible and represented graphically in conjunction with other related assets or attributes in a meaningful manner in a visualisation model, hereinafter referred to as a visualisation.

The use of various methodologies to allow the visualisation of assets or attributes of an organisation to be achieved is known and one known form is to provide one or more graphical "dashboard" illustrations. An example of this method is described in patent application W02007131510 which describes approaches to measurement and presentation. However this form of methodology does not address the diversity of performance dimensions or the challenges of providing a visual representation of relatively complex asset interdependencies.

It is also known to provide simulation and modelling approaches to allow visualisation of performance to be achieved. An example of this is described in the patent application US2008049013. While the generation of models allows a graphical projection to be provided it does not enable customisation of the attributes or assets to be provided within the visual representation.

The aim of the present invention is therefore to provide a method for generating one or more visual representations which allows various assets or attributes to be represented in combination and in a manner which allows the links between the respective assets or attributes to be visible and also in on embodiment, to allow the condition of the assets or attributes with respect to a predefined parameter with which they are compared, to be graphically represented.

In a first aspect of the invention there is provided a method for generating a visual representation of a series of assets or attributes relating to a predetermined subject, said method comprising the steps of identifying the said predetermined subject, identifying the assets or attributes of a first set, linked to the predetermined subject, positioning said assets or attributes of the first set radially around a central point, and wherein at least one further set of assets or attributes are identified and radially placing the- assets or attributes of the second set around those of the first set.

Typically, the above steps can be repeated for as many sets of assets or attributes as required for the visualisation of the said predetermined subject.

In one embodiment, for at least one set of assets or attributes, but more typically for the second and subsequent sets of assets and attributes in the visual representation, the location of the assets or attributes in a particular set, are determined with respect to the assets or attributes in the preceding set which have already been located on the visualisation. For example, if there are three assets or attributes in the set which are linked to a particular asset or attribute in the preceding set then those will be positioned at or adjacent to the said linked asset or attribute in the preceding set.

In one embodiment, the method includes the step of assessing the assets or attributes in a set with respect to a particular parameter. Typically this is performed for each of the sets. In one embodiment, the results of the assessment for each asset or attribute is visually represented by a visual indication on the visual representation.

In one embodiment, the visual indication may be to select a particular colour from a range of colours to provide a visual indication of the result.

In one embodiment the method includes the step of determining a parameter against which the assessment is to be made for each asset or attribute in a particular set. In one embodiment the parameter may differ from set to set.

In one embodiment the centre point of the visual representation includes a core centrally located thereon, said core representing the predetermined subject to which the assets or attribute sets are related.

In a further aspect of the invention, there is provided a method for generating a visual representation of a plurality of assets or attributes of a subject, said visual representation comprising a first set of assets or attributes relating to the subject and said assets or attributes in the first set is each allocated a segment depending radially outwardly from a centre point and wherein at least one further set of assets or attributes are provided and allocated a segment for each of said assets or attributes, said segments depending radially outwardly from the segments of first set of attributes or assets with respect to the centre point.

Typically the number of segments for each set of assets are located around the centre point around 360 degrees in a ring such that the width of each segment may vary from set to set, depending on the number of assets and attributes in each set and/or the distance of the ring from the centre point.

In one embodiment the number of assets or attributes in the second and further sets increases successively. Typically, the width of the assets or attributes in the subsequent sets of assets and attributes reduces in sequence with subsequent sets or attributes.

In one embodiment the assets or attributes in at least one set can be selectively distinguished with respect to the results of an assessment of the assets or attributes with respect to a predetermined parameter.

In one embodiment, the visual representation includes a core which is located at the centre point, said core representing the subject which the visual representation depicts. In one embodiment the subject is any of an organisation, project or task.

Typically, the first set of assets or attributes depend radially from the core located at the centre point and then subsequent sets of assets or attributes, depend radially away from the first set of assets or attributes.

In one embodiment, the assets or attributes in the second set of assets or attributes are located with respect to an asset or attribute in the first sets of attributes with which the same are linked.

In one embodiment, each of the subsequent sets of assets or attributes, represent a subset of the asset or attribute from the previous set of assets or attributes to which the same are linked.

In a yet further aspect of the invention there is provided a visualisation of a predetermined subject, said visualisation comprising a centre point including a core representing said subject, and a plurality of rings depending successively radially therefrom, each of said rings representing a set of assets or attributes linked to the said subject, and wherein each of said rings includes a segment for each of the assets or attributes in said set.

Typically, each set of assets or attributes, is provided in an annular form around the centre point.

In one embodiment a segment for an asset or attribute of one set is selectively positioned with respect to a segment of the ring representing the previously visualised set of assets or attributes.

In one embodiment a plurality of visual representations formed in accordance with the invention, can be generated and viewed in conjunction so as to allow the viewing and monitoring of the implication of the performance of each of these visual representations. It is also possible, for example, to identify a particular asset or attribute from a first visual representation and then to generate another visual representation for that specific, selected asset and attribute. It is found that the ability to generate visual representations in this form, allows an improved means of determining a rationale for options for action to be prepared to address specific concerns and to agree and effect relevant actions. It also allows the review of a particular position of an object or organisation from alternative view points, including aggregate view points, to assess the overall performance position for an asset or collection of assets and also to investigate specific details of selected assets or attributes.

A specific embodiment of the invention is now described with reference to the accompanying drawings; wherein
Figure 1 illustrates the starting core for the visual representation which is to be generated in accordance with one embodiment of the invention;
Figure 2 illustrates a screenshot showing the selection of assets or attributes for a set to be depicted;
Figure 3 illustrates a screenshot showing the selection of assets or attributes for a second set to be depicted;
Figure 4 illustrates a visual representation in accordance with the invention showing the selected first and second sets of assets or attributes;
Figure 5 illustrates the visual representation of Figure 4 with a third set of assets or attributes located thereon.

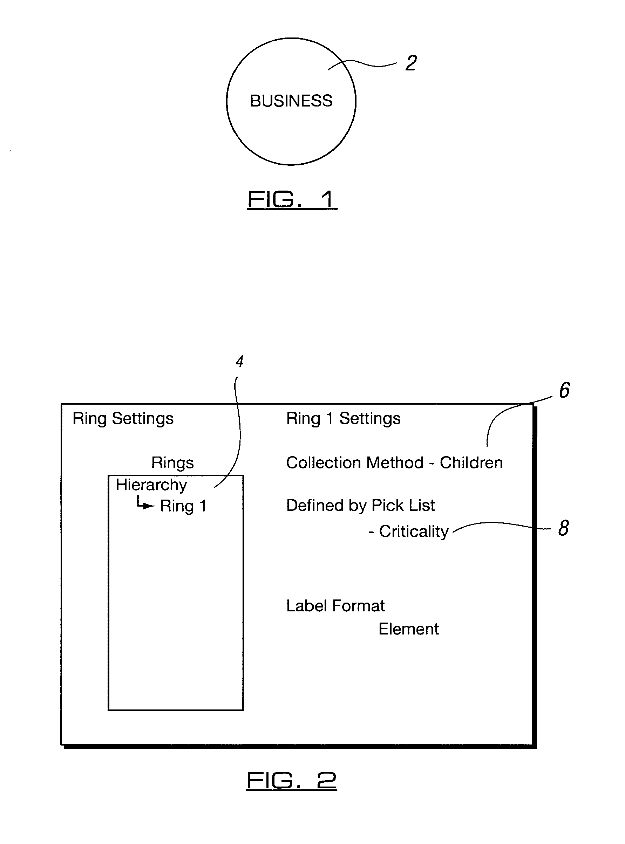

In accordance with the invention method, the first step to be performed is to select the subject and the scope of the subject for which it is to be generated. In this example, the subject is a Business as a whole and this title is therefore entered as the core 2 of the visual representation shown in Figure 1.

A first set of assets or attributes is then selected as shown in Figure 2 via a screen display of a selection tool. For the first set 4 of the visual representation, the assets or attributes 6 to be displayed are selected and at the same time the relationship with the subject is identified. Also, in accordance with this embodiment, a parameter 8 by which the performance of each of the assets or attributes is to be assessed and displayed is selected and the assessment is performed for each of the assets or attributes in the set 4.

In this example, the assets or attributes for the first set are the "children" of the subject (i.e. the primary Business Units). The parameter 8 which is selected for assessment is the "criticality" of each of the Business Units 6. In this case, the result of the assessment is coded as Red (indicated as blank) or Yellow colour (indicated by hatching) indicating high or medium critically to the Business as a whole.

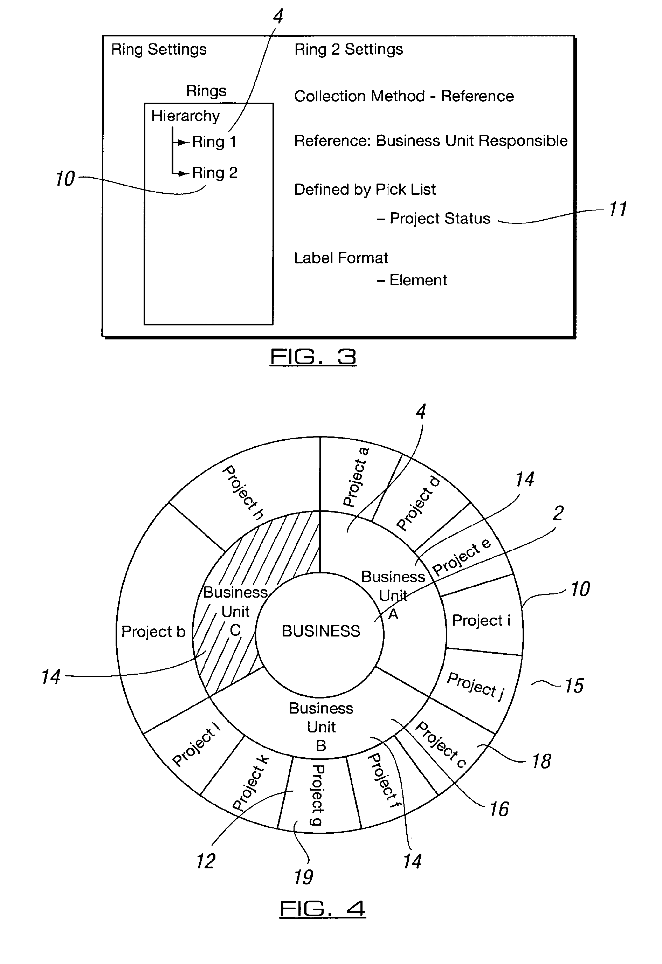

For the second set 10 of assets or attributes 12, as indicated in Figure 3, the assets or attributes for the set 10 are identified. In addition the relationship of the assets or attributes 12 with the assets or attributes 6 in the first set 4 are identified and the respective location of each of the assets or attributes in the visual representation are selected with respect to any links between the same. In addition the parameter which is to be used to assess the assets or attributes in that set is also allocated.

In this example, the assets or attributes 12 for the second set 10 specified are those Projects for which each of the Business Units is responsible. The parameter 11 selected is the "project Status". In this case, the results of the parameter assessment is coded as Red or Yellow or Green to indicated, for example, the calculation of projected slippage or budget variation.

Figure 4 illustrates a visual representation 15 generated for the first and second sets of assets or attributes generated as described above. It will be seen that the visual representation takes the form of a target with a succession of annular rings around the core 2 representing the business. A series of segments 14 make up each ring and depend radially from the core 2. These segments represent the assets or attributes 6 of the first set 4 and form an annular ring 16 around the core 2. The particular colour of each of the segments is selected to represent the result of the assessment of that particular segment with regard to the parameter 8. The outer annular ring 18 is formed of the segments 19 which are allocated to the assets or attributes 12 of the second set 10 and again the colour selected reflects the results of the parameter assessment.

For a third set of assets or attributes, and any subsequent sets required to complete the visual representation of the subject, the assets or attributes for that set are selected and their relationship with the previous set is defined along with the parameter by which the assets and attributes performance is to be assessed and displayed and this can be repeated for as many sets as required.

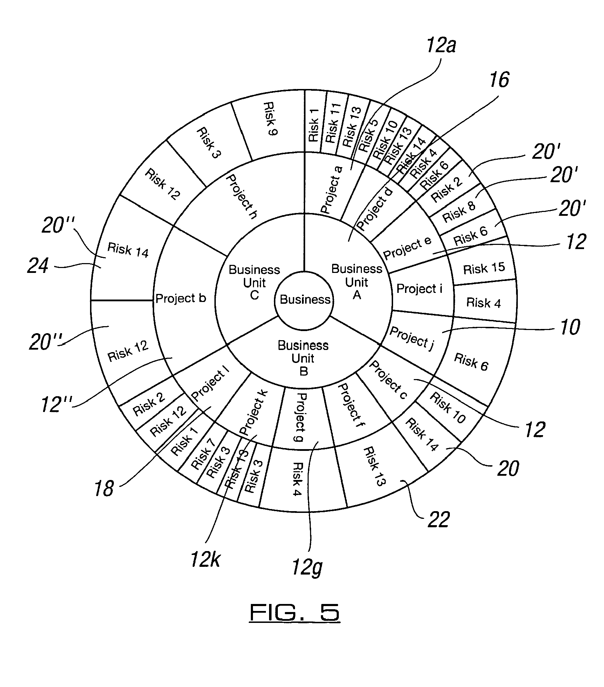

In this example, the assets or attributes 20 specified for the third set 22 are the Risks currently associated with each Project asset or attribute 12 of the second set 10. The parameter selected is the "severity" of the risk. In this case, severity is colour coded as the colours Red or Yellow or Green with the colour selected indicating the result of the assessment of the automatic calculation of the impact value on the business. This set 22 of assets or attributes are used to generate the third annular ring 24 as shown in Figure 5 with, once again, the location of the assets or attributes 20 being selected so that the appropriate segment depends from the linked project segment in the annular ring 18 such that for example, project e asset 12' has three relevant asset or attribute segments 20' depending therefrom, all of which are relevant to that project, while project b asset 12" only has two segments 20" depending therefore as only two risk assets or attributes are relevant thereto.

It should therefore be appreciated that the number of assets in one set linked to an asset in the preceding set can vary between assets and that the visual representation can be adapted accordingly.

As the visual representation grows to accommodate & represent a wider range of business relationships, so its usefulness increases. In this example it can be easily seen which of those Projects with a flagged status within critical Business Units are also associated with Risks that are assessed as severe to the Business (i.e. Projects 12a, 12g and 12k). Such an insight supports decision making to inform investment in mitigation activity. Given that the assessed performance reported in the target is based on properties that can be collected and generated dynamically, the target provides a powerful real-time visual representation to inform decision making in a complex environment.

Thus, in accordance with the invention, there is provided a means for assembling an architecture comprising asset or attribute descriptions, measures of effectiveness of those assets or attributes and arbitrary reference information relating to the asset components and dependencies while at the same time using an architecture modelling environment to do so. The invention allows the connection of measures to source its performance data for all relevant performance view points and the ability to select an asset, or set of assets or asset components which can be analysed. For each of the assets or set of assets or asset components, there can be generated one or more visual representations structures by, for each visual representation, selecting the logic for generating each successive annular ring, each of which represents a particular set of assets or attributes. The annular rings are progressively moved from the centre core. The provision of an assessment of these assets or attributes against one or more parameters provides a visual indication of actual performance, or preferred performance of the assets or attributes and which can be clearly and quickly visually identified.

## Claims

**1.** A method for generating a visual representation of a series of assets or attributes relating to a predetermined subject, said method comprising the steps of identifying the said predetermined subject, identifying the assets or attributes of a first set linked to the predetermined subject, positioning said assets or attributes of the first set radially around a central point of the visual representation and wherein at least one further set of assets or attributes linked to the predetermined subject are identified and radially placing the assets or attributes of the second set around those of the first set.

**2.** A method according to claim 1 wherein the steps are repeated for as many sets of assets or attributes as required with each set being progressively positioned radially around those of the preceding set.

**3.** A method according to claim 1 wherein at least one set of assets or attributes, the location of the assets or attributes in a particular set, is determined with respect to the assets or attributes in the preceding set.

**4.** A method according to claim 3 wherein the location of the assets or attributes with regard to a preceding set is undertaken with regard to the second and subsequent sets of assets.

**5.** A method according to claim 3 wherein those assets or attributes in a particular set which are linked to a particular asset or attribute in a preceding set are positioned at or adjacent to the location of said asset or attribute in the preceding set.

**6.** A method according to claim 1 wherein the method includes a step of assessing the assets or attributes in a set with respect to a specific plurality.

**7.** A method according to claim 6 wherein the result of the assessment for each asset or attribute is visually represented on the visual representation.

**8.** A method according to claim 7 wherein the visual indication is the selection of one of a range of colours.

**9.** A method according to claim 7 wherein a method includes a step of determining a parameter against which the assessment is to be made for each asset or attribute in a particular set.

**10.** A method according to claim 9 wherein the parameter which is selected differs from set to set.

**11.** A method according to claim 1 wherein the centre point of visual representation includes a core central located thereon, said core representing the subject which the asset or attribute sets are related.

**12.** A method for generating a visual representation of a plurality of assets or attributes of a subject, said visual representation comprising a first set of assets or attributes relating to the subject and said assets or attributes in the first set is each allocated a segment depending radially outwardly from a centre point and wherein at least one further set of assets or attributes are provided and allocated a segment for each of said assets or attributes, said segments depending radially outwardly from the segments of first set of attributes or assets with respect to the centre point.

**13.** A method according to claim 12 wherein the number of assets or attributes in the second and further sets increases successively.

**14.** A method according to claim 13 wherein the width of the assets or attributes in the subsequent sets of assets and attributes reduces in sequence with subsequent sets or attributes.

**14.** A method according to claim 12 wherein the assets and attributes in at least one set is selectively distinguished with respect to the results and assessment of the assets or attributes with respect to a predetermined parameter.

**15.** A method according to claim 12 wherein the visual representation includes a core located at the centre point, said core represented the subject which the visual representation depicts.

**16.** A method according to claim 12 wherein a plurality of visual representations are generated and viewed in conjunction so as to allow the viewing an monitoring of the implication of the performance of each of these visual representations.

**17.** A visualisation of a predetermined subject, said visualisation comprising a centre point including a core representing said subject, and a plurality of rings depending successively radially therefrom, each of said rings representing a set of assets or attributes linked to the said subject, and wherein each of said rings includes a segment representing each of the assets or attributes in said set.

**18.** A visualisation according to claim 17 wherein each set of assets or attributes, is provided in an annular form around the centre point.

**19.** A visualisation according to claim 17 wherein a segment for an asset or attribute of one set is selectively positioned with respect to a segment of the ring representing the previously visualised set of assets or attributes.
